# EUROPEAN PATENT SPECIFICATION

(11) **EP 2 640 141 B1**
(45) Date of publication and mention of the grant of the patent: **04.10.2017**
(21) Application number: 11845293.7
(22) Date of filing: 30.11.2011
(51) Int. Cl.: H04W 72/04

(54) **METHOD, DEVICE AND TERMINAL FOR ALLOCATING CHANNEL RESOURCES**
VERFAHREN, VORRICHTUNG UND ENDGERÄT ZUR ZUORDNUNG VON KANALRESSOURCEN
PROCÉDÉ, DISPOSITIF ET TERMINAL POUR ATTRIBUER DES RESSOURCES DE CANAL

(30) Priority: 01.12.2010 CN 201010569380
(43) Date of publication of application: 18.09.2013
(73) Proprietor: Huawei Technologies Co., Ltd., Longgang District Shenzhen, Guangdong 518129 (CN)
(72) Inventor: FANG, Ming, Guangdong 518129 (CN); WANG, Jiyong, Guangdong 518129 (CN); QIN, Jun, Guangdong 518129 (CN)
(74) Representative: Thun, Clemens
(86) International application number: PCT/CN2011/083191
(87) International publication number: WO 2012/072027

(56) References cited:
- WO-A1-01/03332
- WO-A1-01/72080
- WO-A1-01/72081
- WO-A1-99/29130
- WO-A1-2005/060303
- CN-A- 1 602 097
- CN-A- 1 719 740
- US-A1- 2007 076 668

## Description

### TECHNICAL FIELD

The present invention relates to the field of communication technologies, and in particular, to a method and an apparatus for allocating channel resources, and a terminal.

### BACKGROUND

M2M (Machine to Machine, machine to machine) is a technology for connecting various end devices or subsystems through multiple communication technologies, and aggregating them to a management system to manage and serve the devices or subsystems. Generally, all types of communication related to "machines" are called MTC (Machine Type Communication, machine type communication).

With the increase of MTC terminals, the number of access requests from the terminals is enormous, and more responses need to be made by a network to the terminals. For example, paging to the terminals or commands for allocating channels to the terminals cause enormous pressure on a downlink CCCH (Common Control Channel, common control channel), and even lead to congestion of the downlink CCCH.

Therefore, how to expand capacity of the downlink CCCH to support more users is still an issue to be solved.

WO 01 03332 A1 introduces a method of identifying information addressed to a user, and to a communication system comprising a transmitter and a receiver, and the receiver (UE) is arranged to generate a channel estimate on the basis of the training sequence. The communication system is arranged to provide the data packets addressed to different receivers with different training sequences, the receiver is arranged to identify and further process the data packets addressed to the receiver, and the receiver is arranged to ignore the data packets whose training sequence the receiver does not identify.

### SUMMARY

Embodiments of the present invention provide a method and an apparatus for allocating channel resources to increase the number of users supported by a downlink CCCH. The invention is defined in the independent claims 1, 6, 10 and 13. Optional embodiments are set out in the dependent claims. In the method for allocating channel resources, and the terminal according to the embodiments of the present invention, a network side divides an enhanced downlink CCCH into different subchannels according to different training sequences, and sends downlink control information through the subchannels. In this way, the terminal can monitor, according to the configuration information from the network side, subchannels of the enhanced downlink CCCH that are associated with the training sequences supported by the terminal, and receive, through the monitored subchannels, the downlink control information sent by the network side. With expanded capacity, the enhanced downlink CCCH supports more users who access the network, the access success rate of the terminals increases, and the access efficiency is improved.

### BRIEF DESCRIPTION OF DRAWINGS

To describe the technical solutions in the embodiments of the present invention more clearly, the following briefly introduces the accompanying drawing required for describing the embodiments of the present invention. Apparently, the accompanying drawing in the following description show merely some embodiments of the present invention, and persons of ordinary skill in the art may still derive other drawings from the accompanying drawing without creative efforts.
FIG. 1 is a flowchart of a method for allocating channel resources according to a first embodiment of the present invention;
FIG. 2 is a flowchart of a method for allocating channel resources according to a second embodiment of the present invention;
FIG. 3 is a flowchart of a method for allocating channel resources according to a third embodiment of the present invention;
FIG. 4 is a flowchart of a method for allocating channel resources according to a fourth embodiment of the present invention;
FIG. 5 is a schematic diagram of an apparatus for allocating channel resources according to a fifth embodiment of the present invention;
FIG. 6 is a structural diagram of an apparatus for allocating channel resources according to the fifth embodiment of the present invention;
FIG. 7 is a flowchart of a method for allocating channel resources according to a sixth embodiment of the present invention;
FIG. 8 is a schematic diagram of a terminal according to a seventh embodiment of the present invention; and
FIG. 9 is a structural diagram of a terminal according to the seventh embodiment of the present invention.

### DESCRIPTION OF EMBODIMENTS

The following clearly and comprehensively describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

Embodiments not covered by the claims are to be regarded as examples.

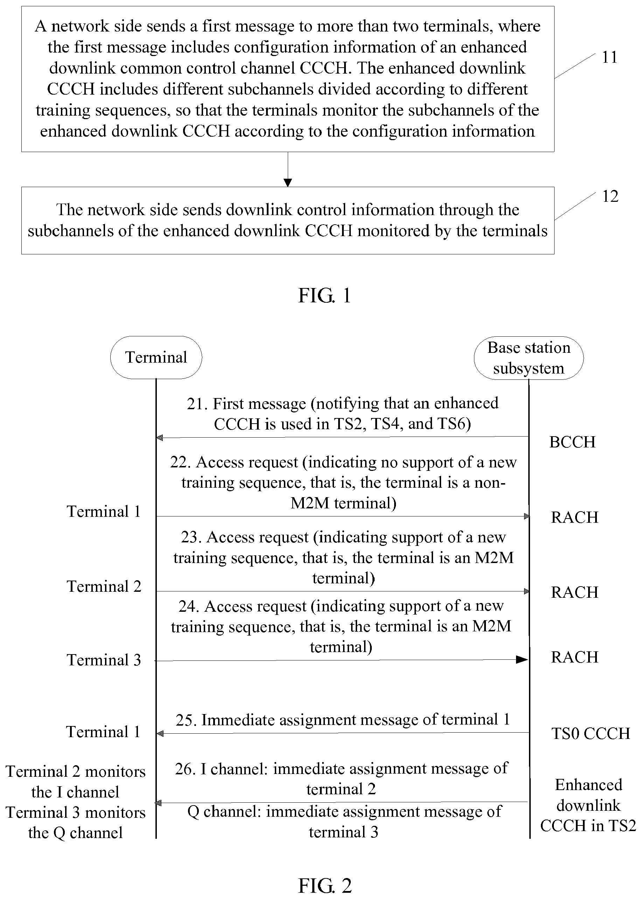

As shown in FIG. 1, a first embodiment of the present invention provides a method for allocating channel resources, including:
Step 11: A network side sends a first message to more than two terminals, where the first message includes configuration information of an enhanced downlink common control channel CCCH. The enhanced downlink CCCH includes different subchannels divided according to different training sequences, so that the terminals monitor the subchannels of the enhanced downlink CCCH according to the configuration information.

In this embodiment, the network side may send the first message to more than two terminals, and the first message may be a broadcast message.

The configuration information of the enhanced downlink CCCH may include timeslot information occupied by the enhanced downlink CCCH, and may further include radio resource parameter description information such as a frequency of the channel, or may further include information about the training sequences used on the channel. If the enhanced downlink CCCH includes more than two subchannels and each subchannel uses a new training sequence, it is necessary to notify which specific training sequence is used on each subchannel, so that the terminals can perform decoding.

According to the timeslot information, the terminals may monitor the subchannels of the enhanced downlink CCCH in the timeslot according to the configuration information.

In this embodiment, in the different subchannels of the enhanced downlink CCCH, at least one subchannel is associated with a new training sequence. The new training sequence refers to a training sequence different from an existing CCCH, and the new training sequence may be a set, which may include one or more training sequences.

According to the prior art, in a GERAN (GSM EDGE Radio Acesss Network, GSM EDGE radio access network), both an AGCH (Access Granted Channel, access grant channel) channel and a PCH (Paging Channel, paging channel) channel are downlink CCCHs logically, and share a physical channel in the downlink direction. Therefore, in a specific application, the downlink CCCH in at least one timeslot may be set as an enhanced downlink CCCH.

For example, the downlink CCCH in only one timeslot may be set as an enhanced downlink CCCH, for example, the downlink CCCH in the timeslot TS0 is set as an enhanced downlink CCCH. For another example, the downlink CCCHs in multiple timeslots may also be set as enhanced downlink CCCHs, for example, the downlink CCCHs in the timeslots TS2, TS4, and TS6 are set as enhanced downlink CCCHs while the downlink CCCH in the timeslot TS0 is still the original downlink CCCH. Of course, the enhanced downlink CCCHs may be set in all timeslots.

As described above, both the AGCH channel and the PCH channel are downlink CCCHs logically, and share a physical channel in the downlink direction. Furthermore, an AGCH message may be delivered by using resources of a PCH channel. An AGCH channel can preempt up to 6 of 9 PCH blocks for delivering an AGCH message. To further expand capacity of the AGCH, the number of AGCH blocks may be controlled flexibly without being limited to the 6 blocks. Therefore, a CCCH block corresponding to a timeslot may be set as an enhanced downlink CCCH.

For example, enhanced downlink CCCHs may be set on one or more PCH blocks corresponding to a timeslot. For example, an enhanced downlink CCCH may be set on the PCH block PCH0, that is, the downlink CCCH of the block PCH0 is an enhanced downlink CCCH. For another example, enhanced downlink CCCHs may be set on multiple PCH blocks such as PCH1, PCH2, and PCH3 while other PCH blocks are original downlink CCCHs. Of course, the enhanced downlink CCCHs may be set on all PCH blocks.

For another example, because the PCH and the AGCH can flexibly share the same downlink CCCH, that is, an AGCH block may be delivered in the position of a PCH block, an AGCH block corresponding to a timeslot may be set as an enhanced downlink CCCH.

For example, the network side sets an enhanced downlink CCCH on PCH0 of the downlink CCCH in the timeslot TS2 of a BCCH frequency, and then the network side may notify more than two terminals through a first message in the following way:
0|1-indicates whether to set an enhanced downlink CCCH on a BCCH frequency, where 0 indicates no and 1 indicates yes; if the value is set to 1, it indicates that two subchannels of the enhanced CCCH correspond to a training sequence identical to that used on an existing downlink BCCH/CCCH, and a training sequence paired with the training sequence, that is, a new training sequence, respectively.

{00100000-The 8 bits correspond to 8 timeslots on a BCCH frequency respectively, and an enhanced downlink CCCH is configured in a timeslot corresponding to the bit set to 1; in this example, an enhanced downlink CCCH is configured in a second timeslot; and
0|1<100000000>-indicates whether enhanced downlink CCCHs are configured specific to a block, where 0 indicates no and 1 indicates yes; if the value is set to 1, more 9 bits are required to indicate respectively on which block the enhanced downlink CCCH is configured. In this example, the enhanced downlink CCCH is configured on the block of PCH0. }

In the example given above, the configuration information may be notified by using a new IE (information element) or using an old IE. For example, the configuration information of the enhanced downlink CCCH may be notified by using a new IE, and therefore, all terminals that support the new training sequence can obtain the configuration information. The configuration information of the enhanced downlink CCCH may be notified by using an old IE, and therefore, by obtaining the old IE, a terminal that does not support the new training sequence can monitor a subchannel, which corresponds to the training sequence used by an existing CCCH, in the enhanced downlink CCCH. Of course, in a specific application, the enhanced downlink CCCH may be determined in other ways, and the foregoing description is only an example.

Step 12: The network side sends downlink control information through the subchannels of the enhanced downlink CCCH monitored by the terminals.

In the process of setting an enhanced downlink CCCH, the downlink CCCH may be set as three downlink subchannels by using an AQPSK (Adaptive Quadrature Phase Shift Keying, adaptive quadrature phase shift keying) modulation mode or a modulation mode of a higher order such as an 8PSK modulation mode.

If the modulation mode in use is AQPSK, when the network side sends downlink control information to two terminals over the same time-frequency resources such as the same timeslot, frequency, and radio frame, the network side uses two different training sequences that are low-correlated, and uses the AQPSK modulation. In this way, two terminals can decode respective downlink control information by using their own training sequences.

When a modulation mode of a higher order such as 8PSK modulation is used to increase subchannels, 3 channels of information may be delivered to 3 different terminals by using 3 different and low-correlated training sequences, so as to further improve capacity of the CCCH.

It is assumed that the enhanced downlink CCCH is divided into two CCCH subchannels. The training sequences corresponding to the two CCCH subchannels of the enhanced downlink CCCH are low-correlated, and therefore, the AQPSK modulation enables simultaneous transmission of two totally different channels of information, and generates an angle between the two channels of information, where the angle decides strength of the signal power on the two channels. For ease of description, the two subchannels divided may be called an I channel and a Q channel respectively when the enhanced downlink CCCH is modulated through AQPSK, where the network side uses AQPSK modulation to modulate signals when the network side transmits the downlink control information through the I channel and Q channel by using the two training sequences. For example, for the I channel, the network side may transmit the downlink control information by using a training sequence identical to that used on the existing downlink BCCH/CCCH; and, for the Q channel, the network side may transmit the downlink control information by using a low-correlated training sequence paired with the training sequence identical to that used on the existing downlink BCCH/CCCH.

As described above, in the method for allocating channel resources according to the embodiment of the present invention, a network side sends a first message to more than two terminals, where the first message includes configuration information of an enhanced downlink common control channel CCCH, and the enhanced downlink CCCH includes different subchannels divided according to different training sequences, so that the terminals monitor the subchannels of the enhanced downlink CCCH according to the configuration information; and the network side sends downlink control information through the subchannels of the enhanced downlink CCCH monitored by the terminals. The CCCH includes different subchannels divided according to different training sequences, and the downlink control information is sent through the subchannels of the enhanced downlink CCCH monitored by the terminals, that is, the downlink control information sent through the subchannels of the CCCH should be downlink control information directed to at least two terminals, and the two pieces of downlink control information are decoded separately. Therefore, the technical solution of the embodiment of the present invention can expand capacity of the downlink CCCH, thereby increasing the number of users supported by the downlink CCCH.

In addition, in the embodiment of the present invention, at the network side, the configuration information of the enhanced downlink CCCH may further carry a terminal type identifier and/or priority setting information.

The terminal type identifier is used for indicating the type of a terminal that needs to monitor the enhanced downlink CCCH, and the priority setting information indicates priority information of the terminal that needs to monitor the enhanced downlink CCCH.

If the configuration information of the enhanced downlink CCCH includes only the terminal type identifier, when the terminal type matches the terminal type identifier, the terminal monitors all subchannels of the enhanced downlink CCCH or only the subchannel associated with the new training sequence in the enhanced downlink CCCH.

As described above, in this embodiment, the new training sequence refers to a training sequence different from the existing CCCH, and the new training sequence may be a set, which may include one or more training sequences.

For example, it is assumed that the terminal type identifier indicates an M2M terminal. When the first terminal is an M2M terminal and the second terminal is a non-M2M terminal, an M2M terminal can monitor all subchannels of the enhanced downlink CCCH because its type matches the terminal type identifier; and a non-M2M terminal, such as an H2H (human to human, human to human) terminal, does not monitor the enhanced downlink CCCH or monitors only the subchannels other than the subchannel associated with the new training sequence in the enhanced downlink CCCH because its type does not match the terminal type identifier. Alternatively, the network side specifies that the M2M terminal monitors the subchannel associated with the new training sequence in the enhanced downlink CCCH, and that the H2H terminal monitors other subchannels.

If the configuration information of the enhanced downlink CCCH includes only priority setting information, when the terminal priority matches the priority setting information, the terminal monitors all subchannels of the enhanced downlink CCCH or only the CCCH subchannel associated with the new training sequence in the enhanced downlink CCCH.

The priority setting information may further specify the type of the terminal that monitors the enhanced downlink CCCH, thereby reducing the number of terminals that monitor the enhanced downlink CCCH, reducing the amount of downlink control information delivered through the enhanced downlink CCCH, and relieving capacity pressure of the downlink CCCH.

For example, a terminal of a low priority can monitor all subchannels of the enhanced downlink CCCH, or only the subchannel associated with the new training sequence in the enhanced downlink CCCH; and a terminal of a high priority does not need to monitor the enhanced downlink CCCH, or can monitor only the subchannels other than the CCCH subchannel associated with the new training sequence in the enhanced downlink CCCH.

If the configuration information of the enhanced downlink CCCH includes both the terminal type identifier and the priority setting information, when the terminal type matches the terminal type identifier and the terminal priority matches the priority setting information, the terminal monitors all subchannels of the enhanced downlink CCCH or only the subchannel associated with the new training sequence in the enhanced downlink CCCH.

For example, an M2M terminal, which has a low priority, can monitor all subchannels of the enhanced downlink CCCH, or only the subchannel associated with the new training sequence in the enhanced downlink CCCH; and an H2H terminal, which has a high priority, does not need to monitor the enhanced downlink CCCH, or can monitor only the subchannels other than the subchannel associated with the new training sequence in the enhanced downlink CCCH.

Of course, depending on the type of an application, the configuration information of the enhanced downlink CCCH may further include other contents, and the foregoing description is only an example.

Further, in the first embodiment of the present invention, capability information of a terminal may be obtained. The capability information indicates whether the terminal supports a new training sequence. In the embodiment of the present invention, the network side may obtain the capability information of the terminal in the following two manners:
Mode 1: The network side receives an access request sent by the terminal, where the access request includes the capability information of the terminal. The network side can obtain the capability information of the terminal according to the access request.
Mode 2: The network side receives a paging message sent by an SGSN (SERVICING GPRS SUPPORT NODE, GPRS serving support node) or an MSC (Mobile Switching Center, mobile switching center) in a core network, where the paging message includes the capability information of the terminal. The network side can obtain the capability information of the terminal according to the paging message.

If the capability information indicates that the terminal supports a new training sequence, downlink control information is sent to the terminal through a subchannel associated with the new training sequence in the enhanced downlink CCCH monitored by the terminal; if the capability information indicates that the terminal does not support the new training sequence, the downlink control information is sent to the terminal through a subchannel associated with an existing training sequence in the enhanced downlink CCCH monitored by the terminal.

That is, which subchannel will be used to send the downlink control information may be determined according to the capability information of the terminal. For a terminal that supports a new training sequence, the downlink control information may be sent through the subchannel associated with the new training sequence; for a terminal that does not support a new training sequence, the downlink control information may be sent through a subchannel other than the subchannel associated with the new training sequence. For example, if the capability information of terminal A and terminal B indicates that both terminals support a new training sequence, the downlink control information of both terminals may be sent respectively through the subchannel associated with the training sequence. For another example, it is assumed that terminal A does not support a new training sequence but terminal B supports a new training sequence. When downlink control information of terminal A and terminal B is sent simultaneously, the downlink control information of terminal B may be sent through the subchannel associated with the new training sequence, and the downlink control information of terminal A may be sent through a subchannel other than the subchannel associated with the new training sequence.

Of course, the terminal type information of the terminal that needs to monitor the enhanced downlink CCCH may be pre-specified and stored. For example, it may be specified that an M2M terminal monitors all subchannels of the enhanced downlink CCCH, or only the subchannel associated with the new training sequence in the enhanced downlink CCCH; and an H2H terminal cannot monitor the enhanced downlink CCCH, or can monitor only the subchannels other than the subchannel associated with the new training sequence in the enhanced downlink CCCH.

After a paging message is received from a core network, if the capability information in the paging message indicates that the terminal supports a new training sequence, the paging message is sent to the terminal through a subchannel associated with the new training sequence in the enhanced downlink CCCH monitored by the terminal; if the capability information indicates that the terminal does not support the new training sequence, the paging message is sent to the terminal through a subchannel associated with an existing training sequence in the enhanced downlink CCCH monitored by the terminal.

The existing training sequence refers to a training sequence used by the existing downlink CCCH channel.

In addition, according to the access request of the terminal, the network side may also determine transmit power for sending downlink control information through different subchannels of the enhanced downlink CCCH.

For example, the network side may estimate the received power of the terminal access request; if the power is low, it may be considered that the terminal is far away from the network side (such as a base station); conversely, it may be considered that the terminal is near the network side. For another example, the network side may also estimate a timing advance (Timing Advance, TA) of an access burst (Access Burst) that bears the access request of each terminal. If the TA is great, it may be considered that the terminal is far away from the network side; conversely, it may be considered that the terminal is near the network side.

If a terminal is far away from the network side, high transmit power is required, and the transmit power on the enhanced downlink CCCH subchannel paired with the terminal needs to decrease correspondingly. For example, it is assumed that two terminals are terminal A and terminal B. When it is determined by using the foregoing method that terminal A is far away from the network side, high transmit power is required if the downlink control information of terminal A is transmitted through the I channel, and by contrast, relatively low transmit power is required if the downlink control information of terminal B is transmitted through the Q channel.

The following describes in detail a method for allocating channel resources according to an embodiment of the present invention with reference to an embodiment.

In a second embodiment of the present invention, it is assumed that the terminals are terminal 1, terminal 2, and terminal 3, where terminal 1 is a non-M2M terminal and does not support a new training sequence in the embodiment of the present invention, terminal 2 and terminal 3 are M2M terminals and support the new training sequence, terminal 2 has a high priority, and terminal 3 has a low priority. In this embodiment, the new training sequence may be a set that includes one or more training sequences. Furthermore, in this embodiment, a BSS (Base Station Subsystem, base station subsystem) is taken as an example of a network-side device for description.

As shown in FIG. 2, a method for allocating channel resources in the second embodiment of the present invention includes:
Step 21: Abase station subsystem determines an enhanced downlink CCCH, and broadcasts a first message to terminal 1, terminal 2, and terminal 3 by using a broadcast message, for example, by using a broadcast channel BCCH, where the first message includes configuration information of the enhanced downlink CCCH. For example, the configuration information may indicate that a downlink CCCH in timeslot TS0 is a non-enhanced downlink CCCH, and that downlink CCCHs in timeslots such as TS2, TS4, and TS6 are enhanced downlink CCCHs.

Steps 22-24: Terminal 1, terminal 2, and terminal 3 send an access request message to the base station subsystem respectively by using a random access channel (Random Access Channel, RACH).

The access request message sent by terminal 1, such as a non-M2M terminal, includes indication information indicating that the terminal does not support a new training sequence; and the access request message sent by terminal 2 and terminal 3, such as M2M terminals, includes indication information indicating that the terminals support a new training sequence.

Step 25: The base station subsystem sends an immediate assignment message to terminal 1 through the enhanced downlink CCCH corresponding to the timeslot TS0.

Step 26: The base station subsystem sends an immediate assignment message to terminal 2 and terminal 3 through the enhanced downlink CCCH corresponding to the timeslot TS2, where the immediate assignment message may be sent to terminal 2 through a subchannel (such as an I channel) corresponding to a training sequence other than a new training sequence, and the immediate assignment message may be sent to terminal 3 through a subchannel (such as a Q channel) associated with the new training sequence; or, the immediate assignment message may be sent to terminal 3 through the I channel, and the immediate assignment message may be sent to terminal 2 through the Q channel.

In addition, the configuration information may further carry a terminal type identifier, priority setting information, and so on. For example, when the configuration information includes a terminal type identifier, an M2M terminal is required to monitor the enhanced downlink CCCH, and a non-M2M terminal does not monitor the enhanced downlink CCCH. Among M2M terminals, a terminal of a low priority is required to monitor the subchannel associated with the new training sequence in the enhanced downlink CCCH, and a terminal of a high priority is required to monitor the subchannels other than the CCCH subchannel associated with the new training sequence in the enhanced downlink CCCH.

According to the foregoing setting, in step 25, the base station subsystem still sends an immediate assignment message to terminal 1 through the enhanced downlink CCCH corresponding to the timeslot TS0, but in step 26, the base station subsystem sends an immediate assignment message to terminal 2 through the I channel of the enhanced downlink CCCH corresponding to the timeslot TS2, and sends an immediate assignment message to terminal 3 through the Q channel.

As seen from the second embodiment, the CCCH includes different subchannels divided according to different training sequences, and the downlink control information is sent to terminal 1, terminal 2, and terminal 3 through different subchannels of the enhanced downlink CCCH monitored by terminal 1, terminal 2, and terminal 3 respectively. That is, the downlink control information sent through the subchannels of the CCCH should be downlink control information directed to at least two terminals, and the two pieces of downlink control information are decoded separately. Therefore, the technical solution of the embodiment of the present invention can expand capacity of the downlink CCCH, thereby increasing the number of users supported by the downlink CCCH.

In a third embodiment of the present invention, it is assumed that the terminals are terminal 1 and terminal 2, where both terminal 1 and terminal 2 are M2M terminals and support a new training sequence, terminal 1 has a high priority, and terminal 2 has a low priority. In this embodiment, the new training sequence may be a set that includes one or more training sequences. In addition, in this embodiment, a base station subsystem is taken as an example of a network-side device for description.

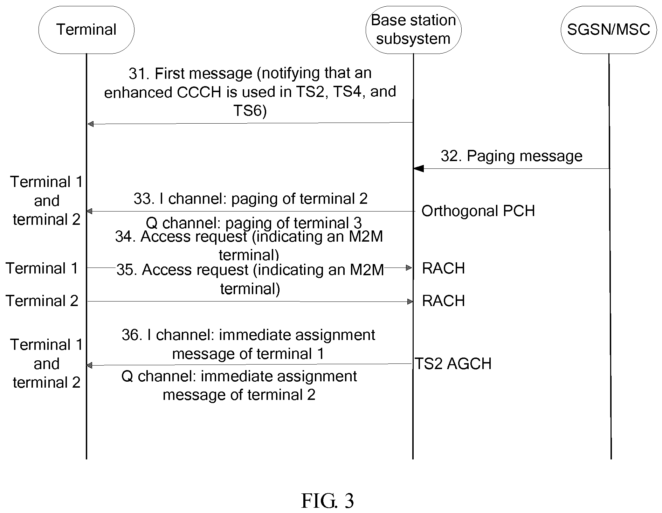

As shown in FIG. 3, a method for allocating channel resources in the third embodiment of the present invention includes:
Step 31: A base station subsystem determines an enhanced downlink CCCH, and broadcasts a first message to terminal 1 and terminal 2 by using a broadcast message, for example, by using a broadcast channel, where the first message includes configuration information of the enhanced downlink CCCH. For example, the configuration information may indicate that a downlink CCCH in timeslot TS0 is a non-enhanced downlink CCCH, and that downlink CCCHs in timeslots such as TS2, TS4, and TS6 are enhanced downlink CCCHs.

Step 32: The base station subsystem receives a paging message sent by an SGSN/MSC, where the paging message includes capability information of a terminal, used for indicating whether the terminal supports a new training sequence.

Herein, the capability information indicates that both terminal 1 and terminal 2 support the new training sequence.

Step 33: The base station subsystem sends a paging message to terminal 1 through an I channel of the enhanced downlink CCCH (orthogonal PCH), and sends a paging message to terminal 2 through a Q channel of the enhanced downlink CCCH; or, sends a paging message to terminal 1 through the Q channel of the enhanced downlink CCCH, and sends a paging message to terminal 2 through the I channel of the enhanced downlink CCCH.

Steps 34 and 35: Terminal 1 and terminal 2 send an access request message to the base station subsystem respectively by using a random access channel.

The access request message sent by terminal 1 includes indication information, indicating that the terminal supports a new training sequence and is an M2M terminal; and the access request message sent by terminal 2 also includes indication information, indicating that the terminal supports a new training sequence and is an M2M terminal.

Step 36: The base station subsystem sends an immediate assignment message to terminals 1 and 2 through the enhanced downlink CCCH (TS2 AGCH) corresponding to the timeslot TS2. Two subchannels associated with the new training sequences in the enhanced downlink CCCH may be used to send the immediate assignment message to terminal 1 and terminal 2; or, the immediate assignment message may be sent to terminal 1 through the I channel, and the immediate assignment message may be sent to terminal 2 through the Q channel.

Of course, as described in the second embodiment, the configuration information may further carry a terminal type identifier, priority setting information, and so on. For example, when the configuration information includes a terminal type identifier, an M2M terminal is required to monitor the enhanced downlink CCCH, and a non-M2M terminal does not need to monitor the enhanced downlink CCCH. Among M2M terminals, a terminal of a low priority is required to monitor the subchannel associated with the new training sequence in the enhanced downlink CCCH, and a terminal of a high priority is required to monitor the subchannels other than the CCCH subchannel associated with the new training sequence in the enhanced downlink CCCH.

According to the foregoing setting, in step 36, the base station subsystem sends an immediate assignment message to terminal 1 through the I channel of the enhanced downlink CCCH corresponding to the timeslot TS2, and sends an immediate assignment message to terminal 2 through the Q channel.

As seen from the third embodiment, the CCCH includes different subchannels divided according to different training sequences, and the downlink control information is sent to terminal 1 and terminal 2 through different subchannels of the enhanced downlink CCCH monitored by terminal 1 and terminal 2 respectively. That is, the downlink control information sent through the subchannels of the CCCH should be downlink control information directed to at least two terminals, and the two pieces of downlink control information are decoded separately. Therefore, the technical solution of the embodiment of the present invention can expand capacity of the downlink CCCH, thereby increasing the number of users supported by the downlink CCCH.

In a fourth embodiment of the present invention, it is assumed that the terminals are terminal 1 and terminal 2, where terminal 1 is a non-M2M terminal and does not support a new training sequence in the embodiment of the present invention, and terminal 2 is an M2M terminal and supports the new training sequence. In this embodiment, the new training sequence may be a set that includes one or more training sequences. Furthermore, in this embodiment, a BSS is taken as an example of a network-side device for description.

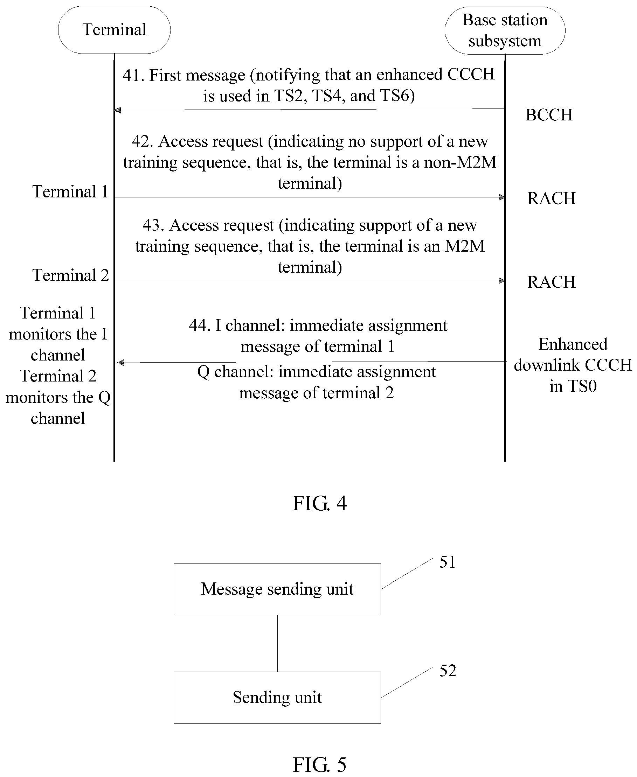

As shown in FIG. 4, a method for allocating channel resources in the fourth embodiment of the present invention includes:
Step 41: Abase station subsystem determines an enhanced downlink CCCH, and broadcasts a first message to terminal 1 and terminal 2 by using a broadcast message, for example, by using a broadcast channel BCCH, where the first message includes configuration information of the enhanced downlink CCCH. For example, the configuration information may indicate that a downlink CCCH in timeslot TS0 is an enhanced downlink CCCH.

Steps 42 and 23: Terminal 1 and terminal 2 send an access request message to the base station subsystem respectively by using a random access channel.

The access request message sent by terminal 1, such as a non-M2M terminal, includes indication information indicating that the terminal does not support a new training sequence; and the access request message sent by terminal 2, such as an M2M terminal, includes indication information indicating that the terminal supports a new training sequence.

Step 43: The base station subsystem sends an immediate assignment message to terminal 1 and terminal 2 through the enhanced downlink CCCH corresponding to the timeslot TS0, where the immediate assignment message may be sent to terminal 1 through a subchannel (such as an I channel) corresponding to a training sequence other than a new training sequence, and the immediate assignment message may be sent to terminal 2 through a subchannel (such as a Q channel) associated with the new training sequence.

As seen from the fourth embodiment, the CCCH includes different subchannels divided according to different training sequences, and the downlink control information is sent to terminal 1 and terminal 2 through subchannels of the enhanced downlink CCCH monitored by terminal 1 and terminal 2 respectively. That is, the downlink control information sent through the subchannels of the CCCH should be downlink control information directed to at least two terminals, and the two pieces of downlink control information are decoded separately. Therefore, the technical solution of the embodiment of the present invention can expand capacity of the downlink CCCH, thereby increasing the number of users supported by the downlink CCCH.

Persons of ordinary skill in the art may understand that all or a part of the processes of the method in the embodiments may be implemented by a computer program instructing relevant hardware. The program may be stored in a computer readable storage medium. When the program runs, the processes of the method in the embodiments are performed. The storage medium may be a magnetic disk, an optical disk, a read-only memory (Read-Only Memory, ROM), or a random access memory (Random Access Memory, RAM), or the like.

As shown in FIG. 5, an apparatus for allocating channel resources in a fifth embodiment of the present invention includes:
a message sending unit 51, configured to send a first message to more than two terminals, where the first message includes configuration information of an enhanced downlink common control channel CCCH, and the enhanced downlink CCCH includes different subchannels divided according to different training sequences, so that the terminals monitor the subchannels of the enhanced downlink CCCH according to the configuration information; and a sending unit 52, configured to send downlink control information through the subchannels of the enhanced downlink CCCH monitored by the terminals.

With reference to the description in the foregoing method embodiment, the message sending unit in this embodiment may send the first message to more than two terminals, where the first message may be a broadcast message.

The configuration information of the enhanced downlink CCCH may include timeslot information occupied by the enhanced downlink CCCH, and may further include radio resource parameter description information such as a frequency of the channel, or may further include information about the training sequences used on the channel. According to the timeslot information, the more than two terminals may monitor different subchannels of the enhanced downlink CCCH in the timeslot.

As described above, the configuration information of the enhanced downlink CCCH further includes a terminal type identifier and/or priority setting information. The meanings of the terminal type identifier and the priority setting information are the same as those described in the method embodiment.

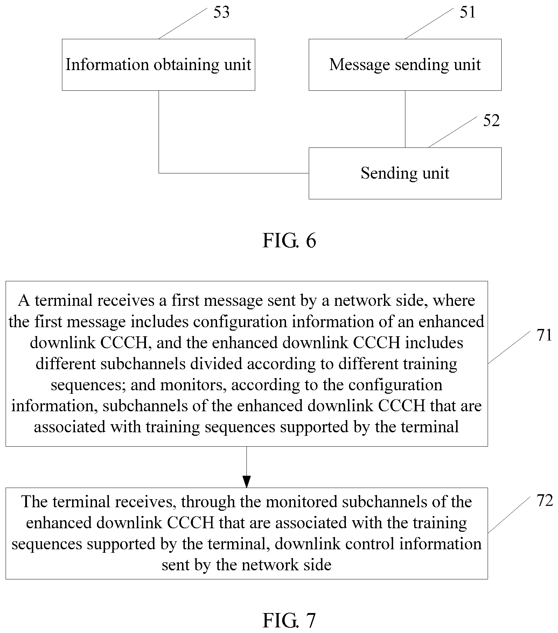

In addition, as shown in FIG. 6, the apparatus may further include:
an information obtaining unit 53, configured to obtain capability information of a terminal, where the capability information indicates whether the terminal supports a new training sequence. In this case, the sending unit 52 is specifically configured to: if the capability information indicates that the terminal supports a new training sequence, send downlink control information to the terminal through a subchannel associated with the new training sequence in the enhanced downlink CCCH monitored by the terminal; and, if the capability information indicates that the terminal does not support the new training sequence, send the downlink control information to the terminal through a subchannel associated with an existing training sequence in the enhanced downlink CCCH monitored by the terminal.

With reference to the description in the foregoing method embodiment, the information obtaining unit 53 may obtain the capability information of the terminal through the terminal or a core network respectively. Correspondingly, the information obtaining unit 53 may include: a first receiving unit, specifically configured to obtain the capability information of the terminal by receiving an access request from the terminal; or may further include: a second receiving unit, configured to obtain the capability information of the terminal by receiving a paging message from the core network, where the paging message includes the capability information of the terminal; or the information obtaining unit includes both the first receiving unit and the second receiving unit.

When the information obtaining unit 53 obtains the capability information of the terminal through the core network, the sending unit 52 is further configured to: if the capability information in the paging message indicates that the terminal supports a new training sequence, send the paging message to the terminal through a subchannel associated with the new training sequence in the enhanced downlink CCCH monitored by the terminal; and, if the capability information indicates that the terminal does not support the new training sequence, send the paging message to the terminal through a subchannel associated with an existing training sequence in the enhanced downlink CCCH monitored by the terminal.

In addition, to further improve capacity of the downlink CCCH, the apparatus may further include a power determining unit, configured to determine transmit power for sending the downlink control information through different subchannels of the enhanced downlink CCCH.

For the working principles of the power determining unit, reference may be made to the description in the foregoing method embodiment. In addition, the apparatus shown in FIG. 5 or FIG. 6 may be located in a base station subsystem.

As seen from the foregoing description, a network side sends a first message to more than two terminals, where the first message includes configuration information of an enhanced downlink common control channel CCCH, and the enhanced downlink CCCH includes different subchannels divided according to different training sequences, so that the terminals monitor the subchannels of the enhanced downlink CCCH according to the configuration information; and the network side sends downlink control information through the subchannels of the enhanced downlink CCCH monitored by the terminals. The CCCH includes different subchannels divided according to different training sequences, and the downlink control information is sent through the subchannels of the enhanced downlink CCCH monitored by the terminals, that is, the downlink control information sent through the subchannels of the CCCH should be downlink control information directed to at least two terminals, and the two pieces of downlink control information are decoded separately. Therefore, the technical solution of the embodiment of the present invention can expand capacity of the downlink CCCH, thereby increasing the number of users supported by the downlink CCCH.

As shown in FIG. 7, a sixth embodiment of the present invention provides a method for allocating channel resources, including:
Step 71: A terminal receives a first message sent by a network side, where the first message includes configuration information of an enhanced downlink CCCH, and the enhanced downlink CCCH includes different subchannels divided according to different training sequences; and monitors, according to the configuration information, subchannels of the enhanced downlink CCCH that are associated with training sequences supported by the terminal.

The first message may be a broadcast message broadcast by the network side. The configuration information of the enhanced downlink CCCH may include timeslot information occupied by the enhanced downlink CCCH, and may further include radio resource parameter description information such as a frequency of the channel, or may further include information about the training sequences used on the channel. According to the timeslot information, the terminal may monitor the subchannels associated with the training sequences supported by the terminal in the enhanced downlink CCCH in the timeslot.

Step 72: The terminal receives, through the monitored subchannels of the enhanced downlink CCCH that are associated with the training sequences supported by the terminal, downlink control information sent by the network side.

The network side divides the enhanced downlink CCCH into different subchannels according to different training sequences, and sends downlink control information through the subchannels. In this way, the terminal can monitor, according to the configuration information from the network side, the subchannels of the enhanced downlink CCCH that are associated with the training sequences supported by the terminal, and receive, through the monitored subchannels, the downlink control information sent by the network side. With expanded capacity, the enhanced downlink CCCH supports more users who access the network, the access success rate of the terminals increases, and the access efficiency is improved.

As is the same as the description in the foregoing method embodiment, the configuration information of the enhanced downlink CCCH further includes a terminal type identifier and/or priority setting information. The terminal type identifier is used for indicating the type of a terminal that needs to monitor the enhanced downlink CCCH, and the priority setting information indicates priority information of the terminal that needs to monitor the enhanced downlink CCCH.

Correspondingly, if the configuration information of the enhanced downlink CCCH includes only the terminal type identifier, when the terminal type matches the terminal type identifier, the terminal monitors, according to the configuration information, the subchannels associated with the training sequences supported by the terminal in the enhanced downlink CCCH.

If the configuration information of the enhanced downlink CCCH includes only priority setting information, when the terminal priority matches the priority setting information, the terminal monitors, according to the configuration information, the subchannels associated with the training sequences supported by the terminal in the enhanced downlink CCCH.

If the configuration information of the enhanced downlink CCCH includes both the terminal type identifier and the priority setting information, when the terminal type matches the terminal type identifier and the terminal priority matches the priority setting information, the terminal monitors, according to the configuration information, the subchannels associated with the training sequences supported by the terminal in the enhanced downlink CCCH.

In addition, in this embodiment, the terminal may report its capability information to the network side. For example, the terminal may send an access request to the network side, and report the capability information to the network side through the access request message, where the capability information indicates whether the terminal supports a new training sequence.

If the capability information indicates that the terminal supports a new training sequence, downlink control information sent by the network side is received through a subchannel associated with the new training sequence in the monitored enhanced downlink CCCH; if the capability information indicates that the terminal does not support the new training sequence, the downlink control information sent by the network side is received through a subchannel associated with an existing training sequence in the monitored enhanced downlink CCCH.

Of course, as described above, the network side may obtain the capability information of the terminal by receiving a paging message from a core network, where the paging message includes the capability information of the terminal, and send the paging message to the terminal through different subchannels after receiving the paging message from the core network. Therefore, correspondingly, if the terminal supports a new training sequence, the terminal receives, through a subchannel associated with the new training sequence in the monitored enhanced downlink CCCH, the paging message sent by the network side; and, if the terminal does not support the new training sequence, the terminal receives, through a subchannel associated with an existing training sequence in the monitored enhanced downlink CCCH, the paging message sent by the network side.

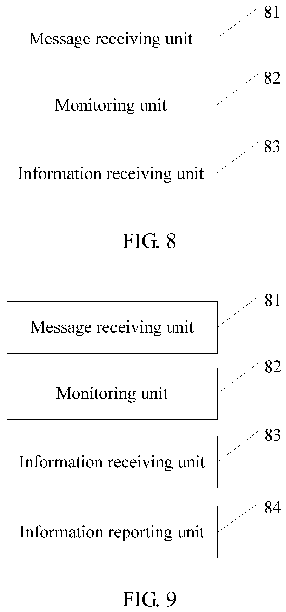

As shown in FIG. 8, a seventh embodiment of the present invention further provides a terminal, including:
a message receiving unit 81, configured to receive a first message sent by a network side, where the first message includes channel configuration information of an enhanced downlink CCCH, and the enhanced downlink CCCH includes different subchannels divided according to different training sequences; a monitoring unit 82, configured to monitor, according to the configuration information, subchannels of the enhanced downlink CCCH that are associated with training sequences supported by the terminal; and an information receiving unit 83, configured to receive, through the monitored subchannels of the enhanced downlink CCCH that are associated with the training sequences supported by the terminal, downlink control information sent by the network side.

In this embodiment, an apparatus for allocating channel resources may send the first message to more than two terminals, where the first message may be a broadcast message.

The configuration information of the enhanced downlink CCCH may include timeslot information occupied by the enhanced downlink CCCH, and may further include radio resource parameter description information such as a frequency of the channel, or may further include information about the training sequences used on the channel. According to the information, the message receiving unit 81 may monitor the subchannels associated with the training sequences supported by the terminal in the enhanced downlink CCCH in the timeslot.

In addition, as described above, the configuration information of the enhanced downlink CCCH further includes a terminal type identifier and/or priority setting information. The meanings of the terminal type identifier and the priority setting information are the same as those described in the method embodiment.

Therefore, correspondingly, the monitoring unit 82 is specifically configured to monitor, according to the configuration information, the subchannels associated with the training sequences supported by the terminal in the enhanced downlink CCCH, if the terminal type matches the terminal type identifier or the terminal priority matches the priority setting information, or if the terminal type matches the terminal type identifier and the terminal priority matches the priority setting information.

In addition, as shown in FIG. 9, the terminal may further include: an information reporting unit 84, configured to report capability information to the network side, where the capability information indicates whether the terminal supports a new training sequence. In this case, the information receiving unit 83 is specifically configured to: if the capability information indicates that the terminal supports the new training sequence, receive, through a subchannel associated with the new training sequence in the enhanced downlink CCCH monitored by the monitoring unit, downlink control information sent by the network side; if the capability information indicates that the terminal does not support the new training sequence, receive, through a subchannel associated with an existing training sequence in the enhanced downlink CCCH monitored by the monitoring unit, the downlink control information sent by the network side.

The network side may also obtain the capability information of the terminal by receiving a paging message from a core network, where the paging message includes the capability information of the terminal, and send the paging message to the terminal through different subchannels after receiving the paging message from the core network. Therefore, correspondingly, the information receiving unit 83 is further configured to: when the network side obtains the capability information of the terminal through the paging message sent by the core network, if the terminal supports a new training sequence, receive, through a subchannel associated with the new training sequence in the monitored enhanced downlink CCCH, the paging message sent by the network side; and, if the terminal does not support the new training sequence, receive, through a subchannel associated with an existing training sequence in the monitored enhanced downlink CCCH, the paging message sent by the network side.

For the working principles of the terminal, reference may be made to the description in the foregoing method embodiment.

As seen from the foregoing description, the terminal provided in the embodiment of the present invention improves the access efficiency. The invention and its embodiments are not limited to the examples described in this specification but may vary within the scope of the appended claims.

## Claims

1. A method for allocating channel resources, **characterized by** comprising:
sending (11), by a network side, a first message to more than two terminals, wherein the first message comprises configuration information of an enhanced downlink common control channel, CCCH, and the enhanced downlink CCCH comprises different subchannels divided according to different training sequences, so that the terminals monitor the subchannels of the enhanced downlink CCCH according to the configuration information, the configuration information comprising a terminal type identifier which is used for indicating the type of a terminal that needs to monitor the enhanced downlink CCCH;
receiving, by the network side, at least one access request message sent by a Machine to Machine, M2M, terminal including indication information indicating that the terminal supports a new training sequence, and at least one access request message sent by a non-M2M terminal including indication information indicating that the terminal does not support a new training sequence; and
sending (12), by the network side, downlink control information to the terminals through the monitored subchannels of the enhanced downlink CCCH that are associated with the training sequences supported by the terminals.

2. The method according to claim 1, wherein the configuration information of the enhanced downlink CCCH comprises timeslot information occupied by the enhanced downlink CCCH, and the so that the terminals monitor the subchannels of the enhanced downlink CCCH according to the configuration information comprises: so that the terminals monitor the subchannels of the enhanced downlink CCCH according to the timeslot information.

3. The method according to claim 2, wherein the configuration information of the enhanced downlink CCCH further comprises priority setting information; and
the priority setting information indicates priority information of the terminal that needs to monitor the enhanced downlink CCCH.

4. The method according to claim 1, further comprising:
obtaining, by the network side, capability information of a terminal, wherein the capability information indicates whether the terminal supports a new training sequence; wherein the sending downlink control information through the subchannels of the enhanced downlink CCCH monitored by the terminals comprises:
sending, if the capability information indicates that the terminal supports the new training sequence, the downlink control information to the terminal through a subchannel associated with the new training sequence in the enhanced downlink CCCH monitored by the terminal; and
sending, if the capability information indicates that the terminal does not support the new training sequence, the downlink control information to the terminal through a subchannel associated with an existing training sequence in the enhanced downlink CCCH monitored by the terminal.

5. The method according to claim 4, wherein the obtaining capability information of a terminal comprises:
receiving an access request sent by the terminal, wherein the access request comprises the capability information of the terminal; or
receiving a paging message sent by a core network, wherein the paging message comprises the capability information of the terminal.

6. A method for allocating channel resources, **characterized by** comprising:
receiving (71), by a terminal, a first message sent by a network side, wherein the first message comprises configuration information of an enhanced downlink common control channel, CCCH, and the enhanced downlink CCCH comprises different subchannels divided according to different training sequences, the configuration information comprising a terminal type identifier which is used for indicating the type of a terminal that needs to monitor the enhanced downlink CCCH; sending, by the terminal, an access request message to the network side, the access request message including indication information indicating that the terminal supports a new training sequence when the terminal is a Machine to Machine, M2M, terminal, and indicating that the terminal does not support a new training sequence when the terminal is a non-M2M terminal; monitoring, by the terminal, according to the configuration information, the subchannels of the enhanced downlink CCCH that are associated with training sequences supported by the terminal; and
receiving (72), by the terminal, through the monitored subchannels of the enhanced downlink CCCH that are associated with the training sequences supported by the terminal, downlink control information sent by the network side.

7. The method according to claim 6, wherein the configuration information of the enhanced downlink CCCH comprises timeslot information occupied by the enhanced downlink CCCH; and
the monitoring, according to the configuration information, subchannels of the enhanced downlink CCCH that are associated with training sequences supported by the terminal comprises:
monitoring, according to the timeslot information, the subchannels associated with the training sequences supported by the terminal in the enhanced downlink CCCH in the timeslot.

8. The method according to claim 7, wherein the configuration information of the enhanced downlink CCCH further comprises priority setting information;
and the priority setting information indicates priority information of the terminal that needs to monitor the enhanced downlink CCCH; and
the monitoring, according to the configuration information, subchannels of the enhanced downlink CCCH that are associated with training sequences supported by the terminal comprises: monitoring, according to the configuration information, the subchannels associated with the training sequences supported by the terminal in the enhanced downlink CCCH if the type of the terminal matches the terminal type identifier and/or the priority of the terminal matches the priority setting information.

9. The method according to claim 6, further comprising:
sending, by the terminal, an access request to the network side, wherein the access request comprises capability information of the terminal, and the capability information indicates whether the terminal supports a new training sequence;
the receiving, through the monitored subchannels of the enhanced downlink CCCH that are associated with the training sequences supported by the terminal, downlink control information sent by the network side comprises:
receiving, if the capability information indicates that the terminal supports the new training sequence, through a subchannel associated with the new training sequence in the monitored enhanced downlink CCCH, the downlink control information sent by the network side; and
receiving, if the capability information indicates that the terminal does not support the new training sequence, through a subchannel associated with an existing training sequence in the monitored enhanced downlink CCCH, the downlink control information sent by the network side.

10. An apparatus at a network side for allocating channel resources, **characterized by** comprising:
a message sending unit (51), configured to send a first message to more than two terminals, wherein the first message comprises configuration information of an enhanced downlink common control channel, CCCH, and the enhanced downlink CCCH comprises different subchannels divided according to different training sequences, so that the terminals monitor the subchannels of the enhanced downlink CCCH according to the configuration information, the configuration information comprising a terminal type identifier which is used for indicating the type of a terminal that needs to monitor the enhanced downlink CCCH;
an information obtaining unit (53) configured to receive at least one access request message sent by a Machine to Machine, M2M, terminal including indication information indicating that the terminal supports a new training sequence, and at least one access request message sent by a non-M2M terminal including indication information indicating that the terminal does not support a new training sequence; and
a sending unit (52), configured to send downlink control information to the terminals through the monitored subchannels of the enhanced downlink CCCH that are associated with the training sequences supported by the terminals.

11. The apparatus according to claim 10, further comprising:
an information obtaining unit (53), configured to obtain capability information of a terminal, wherein the capability information indicates whether the terminal supports a new training sequence; wherein
the sending unit is specifically configured to: if the capability information indicates that the terminal supports the new training sequence, send the downlink control information to the terminal through a subchannel associated with the new training sequence in the enhanced downlink CCCH monitored by the terminal; and, if the capability information indicates that the terminal does not support the new training sequence, send the downlink control information to the terminal through a subchannel associated with an existing training sequence in the enhanced downlink CCCH monitored by the terminal.

12. The apparatus according to claim 11, wherein the information obtaining unit comprises a first receiving unit and/or a second receiving unit;
the first receiving unit is configured to receive an access request from the terminal, wherein the access request comprises the capability information of the terminal; and
the second receiving unit is configured to obtain the capability information of the terminal by receiving a paging message from a core network, wherein the paging message comprises the capability information of the terminal.

13. A terminal, **characterized by** comprising:
a message receiving unit (81), configured to receive a first message sent by a network side, wherein the first message comprises channel configuration information of an enhanced downlink common control channel, CCCH, and the enhanced downlink CCCH comprises different subchannels divided according to different training sequences, the configuration information comprising a terminal type identifier which is used for indicating the type of a terminal that needs to monitor the enhanced downlink CCCH;
an information reporting unit (84), configured to send to the network side an access request message including indication information indicating that the terminal supports a new training sequence when the terminal is a Machine to Machine, M2M, terminal, and indicating that the terminal does not support a new training sequence when the terminal is a non-M2M terminal;
a monitoring unit (82), configured to monitor, according to the configuration information, the subchannels of the enhanced downlink CCCH that are associated with training sequences supported by the terminal; and
an information receiving unit (83), configured to receive, through the monitored subchannels of the enhanced downlink CCCH that are associated with the training sequences supported by the terminal, downlink control information sent by the network side.

14. The terminal according to claim 13, wherein the configuration information of the enhanced downlink CCCH comprises timeslot information occupied by the enhanced downlink CCCH; and the monitoring unit is specifically configured to:
monitor, according to the timeslot information, the subchannels associated with the training sequences supported by the terminal in the enhanced downlink CCCH in the timeslot.

15. The terminal according to claim 13, wherein if the configuration information of the enhanced downlink CCCH further comprises priority setting information, the monitoring unit is specifically configured to:
monitor, according to the configuration information, the subchannels associated with the training sequences supported by the terminal in the enhanced downlink CCCH if the type of the terminal matches the terminal type identifier and/or the priority of the terminal matches the priority setting information.

## Patentansprüche

1. Verfahren zum Zuweisen von Kanalressourcen, **dadurch gekennzeichnet, dass** es die folgenden Schritte umfasst:
Senden (11), durch eine Netzseite, einer ersten Nachricht an mehr als zwei Endgeräte, wobei die erste Nachricht Konfigurationsinformationen über einen gemeinsamen Steuerkanal eines erweiterten Downlinks bzw. erweiterten Downlink-CCCH umfasst und der erweiterte Downlink-CCCH verschiedene Subkanäle umfasst, die gemäß verschiedenen Trainingssequenzen aufgeteilt sind, so dass die Endgeräte die Subkanäle des erweiterten Downlink-CCCH gemäß den Konfigurationsinformationen überwachen, wobei die Konfigurationsinformationen eine Endgeräteartkennung umfassen, die verwendet wird zum Anzeigen der Art eines Endgeräts, das den erweiterten Downlink-CCCH überwachen soll;
Empfangen, durch die Netzseite, mindestens einer Zugangsanforderungsnachricht, die von einem Maschine-zu-Maschine-Endgerät bzw. M2M-Endgerät gesendet wurde, die Anzeigeinformationen beinhaltet, die anzeigen, dass das Endgerät eine neue Trainingssequenz unterstützt, und mindestens einer Zugangsanforderungsnachricht, die von einem Nicht-M2M-Endgerät gesendet wurde, die Anzeigeinformationen beinhaltet, die anzeigen, dass das Endgerät keine neue Trainingssequenz unterstützt; und
Senden (12), durch die Netzseite, von Downlink-Steuerinformationen an die Endgeräte über die überwachten Subkanäle des erweiterten Downlink-CCCH, die mit den von den Endgeräten unterstützten Trainingssequenzen assoziiert sind.

2. Verfahren nach Anspruch 1, wobei die Konfigurationsinformationen des erweiterten Downlink-CCCH Zeitschlitzinformationen umfassen, die von dem erweiterten Downlink-CCCH belegt werden und wobei das, so dass die Endgeräte die Subkanäle des erweiterten Downlink-CCCH gemäß den Konfigurationsinformationen überwachen, Folgendes umfasst: so dass die Endgeräte die Subkanäle des erweiterten Downlink-CCCH gemäß den Zeitschlitzinformationen überwachen.

3. Verfahren nach Anspruch 2, wobei die Konfigurationsinformationen des erweiterten Downlink-CCCH ferner Prioritätseinstellinformationen umfassen; und
die Prioritätseinstellinformationen Prioritätsinformationen des Endgeräts anzeigen, das den erweiterten Downlink-CCCH überwachen soll.

4. Verfahren nach Anspruch 1, das ferner den folgenden Schritt umfasst:
Erlangen, durch die Netzseite, von Fähigkeitsinformationen eines Endgeräts, wobei die Fähigkeitsinformationen anzeigen, ob das Endgerät eine neue Trainingssequenz unterstützt; wobei
das Senden von Downlink-Steuerinformationen über die Subkanäle des erweiterten Downlink-CCCH, die von den Endgeräten überwacht werden, die folgenden Schritte umfasst:
Senden, wenn die Fähigkeitsinformationen anzeigen, dass das Endgerät die neue Trainingssequenz unterstützt, der Downlink-Steuerinformationen an das Endgerät über einen Subkanal, der mit der neuen Trainingssequenz assoziiert ist, in dem erweiterten Downlink-CCCH, der von dem Endgerät überwacht wird; und
Senden, wenn die Fähigkeitsinformationen anzeigen, dass das Endgerät die neue Trainingssequenz nicht unterstützt, der Downlink-Steuerinformationen an das Endgerät über einen Subkanal, der mit einer vorhandenen Trainingssequenz assoziiert ist, in dem erweiterten Downlink-CCCH, der von dem Endgerät überwacht wird.

5. Verfahren nach Anspruch 4, wobei das Erlangen der Fähigkeitsinformationen eines Endgeräts die folgenden Schritte umfasst:
Empfangen einer Zugangsanforderung, die durch das Endgerät gesendet wurde, wobei die Zugangsanforderung die Fähigkeitsinformationen des Endgeräts umfasst; oder
Empfangen einer Paging-Nachricht, die von einem Kernnetz gesendet wurde, wobei die Paging-Nachricht die Fähigkeitsinformationen des Endgeräts umfasst.

6. Verfahren zum Zuweisen von Kanalressourcen, **dadurch gekennzeichnet, dass** es die folgenden Schritte umfasst:
Empfangen (71), durch ein Endgerät, einer ersten Nachricht, die von einer Netzseite gesendet wurde, wobei die erste Nachricht Konfigurationsinformationen über einen gemeinsamen Steuerkanal eines erweiterten Downlinks bzw. erweiterten Downlink-CCCH umfasst und der erweiterte Downlink-CCCH verschiedene Subkanäle umfasst, die gemäß verschiedenen Trainingssequenzen aufgeteilt sind, wobei die Konfigurationsinformationen eine Endgeräteartkennung umfassen, die verwendet wird zum Anzeigen der Art eines Endgeräts, das den erweiterten Downlink-CCCH überwachen soll;
Senden, durch das Endgerät, einer Zugangsanforderungsnachricht an die Netzseite, wobei die Zugangsanforderungsnachricht Anzeigeinformationen beinhaltet, die anzeigen, dass das Endgerät eine neue Trainingssequenz unterstützt, wenn das Endgerät ein Maschine-zu-Maschine-Endgerät bzw. M2M-Endgerät ist, und die anzeigen, dass das Endgerät keine neue Trainingssequenz unterstützt, wenn das Endgerät ein Nicht-M2M-Endgerät ist;
Überwachen, durch das Endgerät, gemäß den Konfigurationsinformationen, der Subkanäle des erweiterten Downlink-CCCH, die mit durch das Endgerät unterstützten Trainingssequenzen assoziiert sind; und
Empfangen (72), durch das Endgerät, über die überwachten Subkanäle des erweiterten Downlink-CCCH, die mit den von dem Endgerät unterstützten Trainingssequenzen assoziiert sind, von Downlink-Steuerinformationen, die von der Netzseite gesendet wurden.

7. Verfahren nach Anspruch 6, wobei die Konfigurationsinformationen des erweiterten Downlink-CCCH Zeitschlitzinformationen umfassen, die von dem erweiterten Downlink-CCCH belegt werden; und
das Überwachen, gemäß den Konfigurationsinformationen, der Subkanäle des erweiterten Downlink-CCCH, die mit durch das Endgerät unterstützten Trainingssequenzen assoziiert sind, Folgendes umfasst:
Überwachen, gemäß den Zeitschlitzinformationen, der Subkanäle, die mit den von dem Endgerät unterstützten Trainingssequenzen assoziiert sind, in dem erweiterten Downlink-CCCH in dem Zeitschlitz.

8. Verfahren nach Anspruch 7, wobei die Konfigurationsinformationen des erweiterten Downlink-CCCH ferner Prioritätseinstellinformationen umfassen;
und die Prioritätseinstellinformationen Prioritätsinformationen des Endgeräts anzeigen, das den erweiterten Downlink-CCCH überwachen soll; und
das Überwachen, gemäß den Konfigurationsinformationen, der Subkanäle des erweiterten Downlink-CCCH, die mit durch das Endgerät unterstützten Trainingssequenzen assoziiert sind, Folgendes umfasst: Überwachen, gemäß den Konfigurationsinformationen, der Subkanäle, die mit den durch das Endgerät unterstützten Trainingssequenzen assoziiert sind, in dem erweiterten Downlink-CCCH, wenn die Art des Endgeräts mit der Endgeräteartkennung übereinstimmt und/oder die Priorität der Endgeräts mit den Prioritätseinstellinformationen übereinstimmt.

9. Verfahren nach Anspruch 6, das ferner den folgenden Schritt umfasst:
Senden, durch das Endgerät, einer Zugangsanforderung an die Netzseite, wobei die Zugangsanforderung die Fähigkeitsinformationen des Endgeräts umfasst und die Fähigkeitsinformationen anzeigen, ob das Endgerät eine neue Trainingssequenz unterstützt;
wobei das Empfangen, über die überwachten Subkanäle des erweiterten Downlink-CCCH, die mit den von dem Endgerät unterstützten Trainingssequenzen assoziiert sind, von Downlink-Steuerinformationen, die von der Netzseite gesendet wurden, die folgenden Schritte umfasst:
Empfangen, wenn die Fähigkeitsinformationen anzeigen, dass das Endgerät die neue Trainingssequenz unterstützt, über einen Subkanal, der mit der neuen Trainingssequenz assoziiert ist, in dem überwachten erweiterten Downlink-CCCH, der von der Netzseite gesendeten Downlink-Steuerinformationen; und
Empfangen, wenn die Fähigkeitsinformationen anzeigen, dass das Endgerät die neue Trainingssequenz nicht unterstützt, über einen Subkanal, der mit einer vorhandenen Trainingssequenz assoziiert ist, in dem überwachten erweiterten Downlink-CCCH, der von der Netzseite gesendeten Downlink-Steuerinformationen.

10. Vorrichtung auf einer Netzseite zum Zuweisen von Kanalressourcen, **dadurch gekennzeichnet, dass** sie Folgendes umfasst:
eine Nachrichtensendeeinheit (51), die ausgelegt ist zum Senden einer ersten Nachricht an mehr als zwei Endgeräte, wobei die erste Nachricht Konfigurationsinformationen über einen gemeinsamen Steuerkanal eines erweiterten Downlinks bzw. erweiterten Downlink-CCCH umfasst und der erweiterte Downlink-CCCH verschiedene Subkanäle umfasst, die gemäß verschiedenen Trainingssequenzen aufgeteilt sind, so dass die Endgeräte die Subkanäle des erweiterten Downlink-CCCH gemäß den Konfigurationsinformationen überwachen, wobei die Konfigurationsinformationen eine Endgeräteartkennung umfassen, die verwendet wird zum Anzeigen der Art eines Endgeräts, das den erweiterten Downlink-CCCH überwachen soll;
eine Informationserlangungseinheit (53), die ausgelegt ist zum Empfangen mindestens einer Zugangsanforderungsnachricht, die von einem Maschine-zu-Maschine-Endgerät bzw. M2M-Endgerät gesendet wurde, die Anzeigeinformationen beinhaltet, die anzeigen, dass das Endgerät eine neue Trainingssequenz unterstützt, und mindestens einer Zugangsanforderungsnachricht, die von einem Nicht-M2M-Endgerät gesendet wurde, die Anzeigeinformationen beinhaltet, die anzeigen, dass das Endgerät keine neue Trainingssequenz unterstützt; und
eine Sendeeinheit (52), die ausgelegt ist zum Senden von Downlink-Steuerinformationen an die Endgeräte über die überwachten Subkanäle des erweiterten Downlink-CCCH, die mit den von den Endgeräten unterstützten Trainingssequenzen assoziiert sind.

11. Vorrichtung nach Anspruch 10, die ferner Folgendes umfasst:
eine Informationserlangungseinheit (53), die ausgelegt ist zum Erlangen von Fähigkeitsinformationen eines Endgeräts, wobei die Fähigkeitsinformationen anzeigen, ob das Endgerät eine neue Trainingssequenz unterstützt; wobei
die Sendeeinheit insbesondere ausgelegt ist zum: Senden, wenn die Fähigkeitsinformationen anzeigen, dass das Endgerät die neue Trainingssequenz unterstützt, der Downlink-Steuerinformationen an das Endgerät über einen Subkanal, der mit der neuen Trainingssequenz assoziiert ist, in dem erweiterten Downlink-CCCH, der von dem Endgerät überwacht wird; und Senden, wenn die Fähigkeitsinformationen anzeigen, dass das Endgerät die neue Trainingssequenz nicht unterstützt, der Downlink-Steuerinformationen an das Endgerät über einen Subkanal, der mit einer vorhandenen Trainingssequenz assoziiert ist, in dem erweiterten Downlink-CCCH, der von dem Endgerät überwacht wird.

12. Vorrichtung nach Anspruch 11, wobei die Informationserlangungseinheit eine erste Empfangseinheit und/oder eine zweite Empfangseinheit umfasst;
die erste Empfangseinheit ausgelegt ist zum Empfangen einer Zugangsanforderung von dem Endgerät, wobei die Zugangsanforderung die Fähigkeitsinformationen des Endgeräts umfasst; und
die zweite Empfangseinheit ausgelegt ist zum Erlangen der Fähigkeitsinformationen des Endgeräts durch Empfangen einer Paging-Nachricht von einem Kernnetz, wobei die Paging-Nachricht die Fähigkeitsinformationen des Endgeräts umfasst.

13. Endgerät, **dadurch gekennzeichnet, dass** es Folgendes umfasst:
eine Nachrichtenempfangseinheit (81), die ausgelegt ist zum Empfangen einer durch eine Netzseite gesendeten ersten Nachricht, wobei die erste Nachricht Kanalkonfigurationsinformationen über einen gemeinsamen Steuerkanal eines erweiterten Downlinks bzw. erweiterten Downlink-CCCH umfasst und der erweiterte Downlink-CCCH verschiedene Subkanäle umfasst, die gemäß verschiedenen Trainingssequenzen aufgeteilt sind, wobei die Konfigurationsinformationen eine Endgeräteartkennung umfassen, die verwendet wird zum Anzeigen der Art eines Endgeräts, das den erweiterten Downlink-CCCH überwachen soll;
eine Informationsberichtseinheit (84), die ausgelegt ist zum Senden an die Netzseite einer Zugangsanforderungsnachricht, die Anzeigeinformationen beinhaltet, die anzeigen, dass das Endgerät eine neue Trainingssequenz unterstützt, wenn das Endgerät ein Maschine-zu-Maschine-Endgerät bzw. M2M-Endgerät ist, und die anzeigen, dass das Endgerät keine neue Trainingssequenz unterstützt, wenn das Endgerät ein Nicht-M2M-Endgerät ist;
eine Überwachungseinheit (82), die ausgelegt ist zum Überwachen, gemäß den Konfigurationsinformationen, der Subkanäle des erweiterten Downlink-CCCH, die mit von dem Endgerät unterstützten Trainingssequenzen assoziiert sind; und
eine Informationserlangungseinheit (83), die ausgelegt ist zum Empfangen, über die überwachten Subkanäle des erweiterten Downlink-CCCH, die mit den von dem Endgerät unterstützten Trainingssequenzen assoziiert sind, von von der Netzseite gesendeten Downlink-Steuerinformationen.

14. Endgerät nach Anspruch 13, wobei die Konfigurationsinformationen des erweiterten Downlink-CCCH Zeitschlitzinformationen umfassen, die von dem erweiterten Downlink-CCCH belegt werden und die Überwachungseinheit insbesondere ausgelegt ist zum:
Überwachen, gemäß den Zeitschlitzinformationen, der Subkanäle, die mit den von dem Endgerät unterstützten Trainingssequenzen assoziiert sind, in dem erweiterten Downlink-CCCH in dem Zeitschlitz.

15. Endgerät nach Anspruch 13, wobei, wenn die Konfigurationsinformationen des erweiterten Downlink-CCCH ferner Prioritätseinstellinformationen umfassen, die Überwachungseinheit insbesondere ausgelegt ist zum:
Überwachen, gemäß den Konfigurationsinformationen, der Subkanäle, die mit den von dem Endgerät unterstützten Trainingssequenzen assoziiert sind, in dem erweiterten Downlink-CCCH, wenn die Art des Endgeräts mit der Endgeräteartkennung übereinstimmt und/oder die Priorität des Endgeräts mit den Prioritätseinstellinformationen übereinstimmt.

## Revendications

1. Procédé permettant d'attribuer des ressources de canal, **caractérisé en ce qu'**il comprend :
envoyer (11), par un côté réseau, un premier message à plus de deux terminaux, le premier message comportant des informations de configuration d'un canal de contrôle commun, CCCH, de liaison descendante amélioré, et le CCCH de liaison descendante amélioré comportant différents sous-canaux divisés selon différentes séquences d'apprentissage, pour que les terminaux contrôlent les sous-canaux du CCCH de liaison descendante amélioré selon les informations de configuration, les informations de configuration comportant un identifiant de type de terminal qui est utilisé pour indiquer le type d'un terminal qui doit contrôler le CCCH de liaison descendante amélioré ;
recevoir, par le côté réseau, au moins un message de requête d'accès envoyé par un terminal de communication entre machines, M2M, contenant des informations d'indication indiquant que le terminal prend en charge une nouvelle séquence d'apprentissage, et au moins un message de requête d'accès envoyé par un terminal non M2M contenant des informations d'indication indiquant que le terminal ne prend pas en charge une nouvelle séquence d'apprentissage ; et
envoyer (12), par le côté réseau, des informations de commande de liaison descendante aux terminaux par l'intermédiaire des sous-canaux contrôlés du CCCH de liaison descendante amélioré qui sont associés aux séquences d'apprentissage prises en charge par les terminaux.

2. Procédé selon la revendication 1, dans lequel les informations de configuration du CCCH de liaison descendante amélioré comprennent des informations d'intervalle de temps occupé par le CCCH de liaison descendante amélioré, et le pour que les terminaux contrôlent les sous-canaux du CCCH de liaison descendante amélioré selon les informations de configuration comprend : pour que les terminaux contrôlent les sous-canaux du CCCH de liaison descendante amélioré selon les informations d'intervalle de temps.

3. Procédé selon la revendication 2, dans lequel les informations de configuration du CCCH de liaison descendante amélioré comprennent en outre des informations de définition de priorité ; et les informations de définition de priorité indiquent des informations de priorité du terminal qui doit contrôler le CCCH de liaison descendante amélioré.

4. Procédé selon la revendication 1, comprenant en outre :
obtenir, par le côté réseau, des informations de capacité d'un terminal, les informations de capacité indiquant si le terminal prend en charge une nouvelle séquence d'apprentissage ou non ;
l'étape consistant à envoyer des informations de commande de liaison descendante par l'intermédiaire des sous-canaux du CCCH de liaison descendante amélioré contrôlé par les terminaux comprenant :
envoyer, si les informations de capacité indiquent que le terminal prend en charge la nouvelle séquence d'apprentissage, les informations de commande de liaison descendante au terminal par l'intermédiaire d'un sous-canal associé à la nouvelle séquence d'apprentissage dans le CCCH de liaison descendante amélioré contrôlé par le terminal ; et
envoyer, si les informations de capacité indiquent que le terminal ne prend pas en charge la nouvelle séquence d'apprentissage, les informations de commande de liaison descendante au terminal par l'intermédiaire d'un sous-canal associé à une séquence d'apprentissage existante dans le CCCH de liaison descendante amélioré contrôlé par le terminal.

5. Procédé selon la revendication 4, dans lequel l'étape consistant à obtenir des informations de capacité d'un terminal comprend :
recevoir une requête d'accès envoyée par le terminal, la requête d'accès comprenant les informations de capacité du terminal ; ou
recevoir un message de radiomessagerie envoyé par un réseau d'infrastructure, le message de radiomessagerie comprenant les informations de capacité du terminal.

6. Procédé permettant d'attribuer des ressources de canal, **caractérisé en ce qu'**il comprend :
recevoir (71), par un terminal, un premier message envoyé par un côté réseau, le premier message comportant des informations de configuration d'un canal de contrôle commun, CCCH, de liaison descendante amélioré, et le CCCH de liaison descendante amélioré comportant différents sous-canaux divisés selon différentes séquences d'apprentissage, les informations de configuration comportant un identifiant de type de terminal qui est utilisé pour indiquer le type d'un terminal qui doit contrôler le CCCH de liaison descendante amélioré ;
envoyer, par le terminal, un message de requête d'accès au côté réseau, le message de requête d'accès contenant des informations d'indication indiquant que le terminal prend en charge une nouvelle séquence d'apprentissage lorsque le terminal est un terminal de communication entre machines, M2M, et indiquant que le terminal ne prend pas en charge une nouvelle séquence d'apprentissage lorsque le terminal est un terminal non M2M ;
contrôler, par le terminal, selon les informations de configuration, les sous-canaux du CCCH de liaison descendante amélioré qui sont associés aux séquences d'apprentissage prises en charge par le terminal ; et
recevoir (72), par le terminal, par l'intermédiaire des sous-canaux contrôlés du CCCH de liaison descendante amélioré qui sont associés aux séquences d'apprentissage prises en charge par le terminal, des informations de commande de liaison descendante envoyées par le côté réseau.

7. Procédé selon la revendication 6, dans lequel les informations de configuration du CCCH de liaison descendante amélioré comprennent des informations d'intervalle de temps occupé par le CCCH de liaison descendante amélioré ; et
l'étape consistant à contrôler, selon les informations de configuration, des sous-canaux du CCCH de liaison descendante amélioré qui sont associés à des séquences d'apprentissage prises en charge par le terminal comprend :
contrôler, selon les informations d'intervalle de temps, les sous-canaux associés aux séquences d'apprentissage prises en charge par le terminal dans le CCCH de liaison descendante amélioré dans l'intervalle de temps.

8. Procédé selon la revendication 7, dans lequel les informations de configuration du CCCH de liaison descendante amélioré comprennent en outre des informations de définition de priorité ; et les informations de définition de priorité indiquent des informations de priorité du terminal qui doit contrôler le CCCH de liaison descendante amélioré ; et
l'étape consistant à contrôler, selon les informations de configuration, des sous-canaux du CCCH de liaison descendante amélioré qui sont associés à des séquences d'apprentissage prises en charge par le terminal comprend : contrôler, selon les informations de configuration, les sous-canaux associés aux séquences d'apprentissage prises en charge par le terminal dans le CCCH de liaison descendante amélioré si le type du terminal correspond à l'identifiant de type de terminal et/ou si la priorité du terminal correspond aux informations de définition de priorité.

9. Procédé selon la revendication 6, comprenant en outre :
envoyer, par le terminal, une requête d'accès au côté réseau, la requête d'accès comportant des informations de capacité du terminal, et les informations de capacité indiquant si le terminal prend en charge une nouvelle séquence d'apprentissage ;
l'étape consistant à recevoir, par l'intermédiaire des sous-canaux contrôlés du CCCH de liaison descendante amélioré qui sont associés aux séquences d'apprentissage prises en charge par le terminal, des informations de commande de liaison descendante envoyées par le côté réseau comprend :
recevoir, si les informations de capacité indiquent que le terminal prend en charge la nouvelle séquence d'apprentissage, par l'intermédiaire d'un sous-canal associé à la nouvelle séquence d'apprentissage dans le CCCH de liaison descendante amélioré contrôlé, les informations de commande de liaison descendante envoyées par le côté réseau ; et
recevoir, si les informations de capacité indiquent que le terminal ne prend pas en charge la nouvelle séquence d'apprentissage, par l'intermédiaire d'un sous-canal associé à une séquence d'apprentissage existante dans le CCCH de liaison descendante amélioré contrôlé, les informations de commande de liaison descendante envoyées par le côté réseau.

10. Appareil côté réseau permettant d'attribuer des ressources de canal, **caractérisé en ce qu'**il comprend :
une unité d'envoi de message (51), configurée pour envoyer un premier message à plus de deux terminaux, le premier message comportant des informations de configuration d'un canal de contrôle commun, CCCH, de liaison descendante amélioré, et le CCCH de liaison descendante amélioré comportant différents sous-canaux divisés selon différentes séquences d'apprentissage, pour que les terminaux contrôlent les sous-canaux du CCCH de liaison descendante amélioré selon les informations de configuration, les informations de configuration comportant un identifiant de type de terminal qui est utilisé pour indiquer le type d'un terminal qui doit contrôler le CCCH de liaison descendante amélioré ;
une unité d'obtention d'informations (53), configurée pour recevoir au moins un message de requête d'accès envoyé par un terminal de communication entre machines, M2M, contenant des informations d'indication indiquant que le terminal prend en charge une nouvelle séquence d'apprentissage, et au moins un message de requête d'accès envoyé par un terminal non M2M contenant des informations d'indication indiquant que le terminal ne prend pas en charge une nouvelle séquence d'apprentissage ; et
une unité d'envoi (52), configurée pour envoyer des informations de commande de liaison descendante aux terminaux par l'intermédiaire des sous-canaux contrôlés du CCCH de liaison descendante amélioré qui sont associés aux séquences d'apprentissage prises en charge par les terminaux.

11. Appareil selon la revendication 10, comprenant en outre :
une unité d'obtention d'informations (53), configurée pour obtenir des informations de capacité d'un terminal, les informations de capacité indiquant si le terminal prend en charge une nouvelle séquence d'apprentissage ou non ;
l'unité d'envoi étant configurée spécifiquement pour : si les informations de capacité indiquent que le terminal prend en charge la nouvelle séquence d'apprentissage, envoyer les informations de commande de liaison descendante au terminal par l'intermédiaire d'un sous-canal associé à la nouvelle séquence d'apprentissage dans le CCCH de liaison descendante amélioré contrôlé par le terminal ; et, si les informations de capacité indiquent que le terminal ne prend pas en charge la nouvelle séquence d'apprentissage, envoyer les informations de commande de liaison descendante au terminal par l'intermédiaire d'un sous-canal associé à une séquence d'apprentissage existante dans le CCCH de liaison descendante amélioré contrôlé par le terminal.

12. Appareil selon la revendication 11, dans lequel l'unité d'obtention d'informations comprend une première unité de réception et/ou une deuxième unité de réception ;
la première unité de réception est configurée pour recevoir une requête d'accès à partir du terminal, la requête d'accès comportant les informations de capacité du terminal ; et
la deuxième unité de réception est configurée pour obtenir les informations de capacité du terminal en recevant un message de radiomessagerie à partir d'un réseau d'infrastructure, le message de radiomessagerie comprenant les informations de capacité du terminal.

13. Terminal, **caractérisé en ce qu'**il comprend :
une unité de réception de message (81), configurée pour recevoir un premier message envoyé par un côté réseau, le premier message comportant des informations de configuration de canal d'un canal de contrôle commun, CCCH, de liaison descendante amélioré, et le CCCH de liaison descendante amélioré comportant différents sous-canaux divisés selon différentes séquences d'apprentissage, les informations de configuration comportant un identifiant de type de terminal qui est utilisé pour indiquer le type d'un terminal qui doit contrôler le CCCH de liaison descendante amélioré ;
une unité de communication d'informations (84), configurée pour envoyer au côté réseau un message de requête d'accès contenant des informations d'indication indiquant que le terminal prend en charge une nouvelle séquence d'apprentissage lorsque le terminal est un terminal de communication entre machines, M2M, et indiquant que le terminal ne prend pas en charge une nouvelle séquence d'apprentissage lorsque le terminal est un terminal non M2M ;
une unité de contrôle (82), configurée pour contrôler, selon les informations de configuration, les sous-canaux du CCCH de liaison descendante amélioré qui sont associés à des séquences d'apprentissage prises en charge par le terminal ; et
une unité de réception d'informations (83), configurée pour recevoir, par l'intermédiaire des sous-canaux contrôlés du CCCH de liaison descendante amélioré qui sont associés aux séquences d'apprentissage prises en charge par le terminal, des informations de commande de liaison descendante envoyées par le côté réseau.

14. Terminal selon la revendication 13, dans lequel les informations de configuration du CCCH de liaison descendante amélioré comprennent des informations d'intervalle de temps occupé par le CCCH de liaison descendante amélioré ; et l'unité de contrôle est configurée spécifiquement pour :
contrôler, selon les informations d'intervalle de temps, les sous-canaux associés aux séquences d'apprentissage prises en charge par le terminal dans le CCCH de liaison descendante amélioré dans l'intervalle de temps.

15. Terminal selon la revendication 13 dans lequel, si les informations de configuration du CCCH de liaison descendante amélioré comprennent en outre des informations de définition de priorité, l'unité de contrôle est configurée spécifiquement pour :
contrôler, selon les informations de configuration, les sous-canaux associés aux séquences d'apprentissage prises en charge par le terminal dans le CCCH de liaison descendante amélioré si le type du terminal correspond à l'identifiant de type de terminal et/ou si la priorité du terminal correspond aux informations de définition de priorité.
